# EUROPEAN PATENT APPLICATION

(11) **EP 2 202 847 A1**
(43) Date of publication of application: **30.06.2010**
(21) Application number: 08172334.8
(22) Date of filing: 19.12.2008
(51) Int. Cl.: H01Q 13/22, H01Q 21/00, G01S 13/89

(54) **A distributed electromagnetic illumination source and a method**

(71) Applicant: Nederlandse Organisatie voor toegepast -natuurwetenschappelijk onderzoek TNO, 2628 VK Delft (NL)
(72) Inventor: Van der Houwen, Eric Herman, 2264 CR Leidschendam (NL); Nennie, Frans Antonius, 2726 SR Zoetermeer (NL); Bolt, Roland Johannes, 2496 MN Den Haag (NL)
(74) Representative: Hatzmann, Martin

(57) **Abstract**

The invention relates to a distributed electromagnetic illumination source for radiating non-coherent waves. The source comprises a waveguiding structure for guiding electromagnetic waves in a predefined spectrum. Further, the waveguiding structure is provided with a multiple number of apertures arranged substantially along a guided electromagnetic wave propagation direction. A distance between subsequent apertures is larger than a coherence length associated with the predefined spectrum.

## Description

The invention relates to a distributed electromagnetic illumination source.

Using radiometry technology an image can be obtained from an object having a temperature that differs from its surrounding. By using a number of mutually incoherent illuminations sources, the received contrast improves, thereby also improving the quality of the radiometry imaging technique.

Known illumination sources being spatially distributed and providing non-coherent radiation include e.g. complex box shaped devices that are internally provided with absorbing and reflecting material and externally with apertures that are manufactured based on a trial and error method to avoid coherent radiation while providing a uniform amplitude distribution. Further, systems are known including rotating mirror elements that are provided with rough surfaces and rotate at random speed.

It is an object of the invention to provide a distributed electromagnetic illumination source, wherein the disadvantages identified above are reduced. In particular, the invention aims at obtaining an electromagnetic illumination source having a simplified design. Thereto, according to the invention, the distributed electromagnetic illumination source comprises a waveguiding structure for guiding electromagnetic waves in a predefined spectrum, the waveguiding structure being provided with a multiple number of apertures arranged substantially along a guided electromagnetic wave propagation direction wherein a distance between subsequent apertures is larger than a coherence length associated with the predefined spectrum.

By arranging a multiple number of apertures in a waveguiding structure wherein a distance between subsequent apertures is larger than a coherence length associated with the predefined spectrum, the source generates mutually non-coherent radiation waves spatially distributed along a surface. In particular, the dynamic character of the electromagnetic waves that during operation of the source propagate in the waveguiding structure and have a predefined spectrum provide non-coherent radiation waves through the apertures since the distance between subsequent apertures is large enough in relation to the coherence length.

It is noted that the general structure of the waveguiding structure provided with apertures that are arranged substantially along a guided electromagnetic wave propagation direction is known as a slotted waveguide antenna. In the known antenna, the distance between subsequent apertures is smaller than the coherence length so that a single coherent beam without grating lobes is obtained.

Since the slotted waveguide antenna per se is already known and can be manufactured relatively easily due to its simple design, the illumination source according to the invention can also be obtained relatively easily and potentially in a cheap manner. Further, maintenance costs can be relatively low.

The invention also relates to a method of imaging an object.

Other advantageous embodiments according to the invention are described in the following claims.

By way of example only, embodiments of the present invention will now be described with reference to the accompanying figures in which
Fig. 1 shows a schematic view of a first embodiment of an electromagnetic illumination source according to the invention;
Fig. 2 shows a schematic diagram of the electromagnetic illumination source of Figure 1;
Fig. 3 shows a cross sectional view of the electromagnetic illumination source of Figure 1;
Fig. 4 shows a schematic view of a second embodiment of an electromagnetic illumination source according to the invention;
Fig. 5 shows a schematic view of a third embodiment of an electromagnetic illumination source according to the invention;
Fig. 6 shows a schematic view of a fourth embodiment of an electromagnetic illumination source according to the invention; and
Fig. 7 shows a schematic view of the electromagnetic illumination of Figure 1 as part of an imaging arrangement.

It is noted that the figures show merely preferred embodiments according to the invention. In the figures, the same reference numbers refer to equal or corresponding parts.

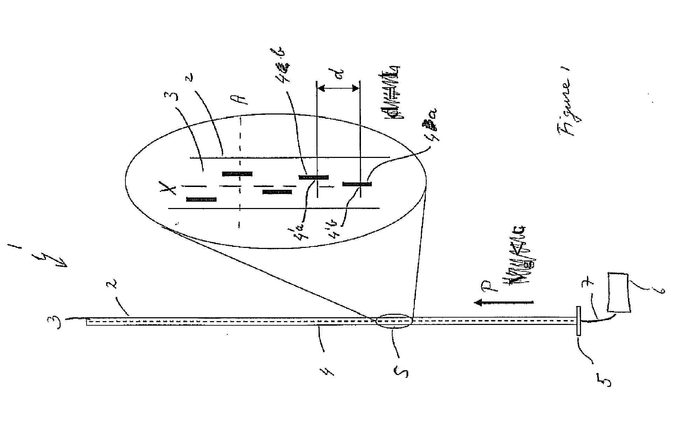

Figure 1 shows a schematic view of a first embodiment of a spatially distributed electromagnetic illumination source 1 according to the invention. The source 1 comprises a waveguiding structure 2 for guiding electromagnetic waves in a predefined spectrum. The waveguiding structure 2 comprises a dielectric structure and a metal shield 3 at least partially covering the dielectric structure. A multiple number of slots 4 are provided in the metal shield 3 to form apertures of the waveguiding structure 1. The apertures 4 are arranged substantially along a guided electromagnetic wave propagation direction P. An electromagnetic source 1 having such a general structure is known as a slotted waveguide antenna.

Figure 1 further shows an enlarged view of a detail S of the electromagnetic illumination source 1. The location of the apertures 4 in the source 1 as depicted in Figure 1 is such that a distance d between subsequent apertures 4a, 4b is larger than a coherence length associated with the predefined spectrum. In this context, the distance between subsequent apertures 4a, 4b is defined as the distance between centre points 4'a, 4'b of the apertures 4a, 4b.

The electromagnetic illumination source 1 also comprises a noise generator 6 that is coupled to the waveguiding structure 2 of the source 1 via a transmission line, viz. implemented as a coupling fiber 7.

During operation of the source 1, the noise generator 6 excites electromagnetic waves in the pre-defined spectrum, preferably in the millimetre-wave range, and couples said waves into the waveguiding structure 2 via the coupling fiber 7. The noise generator substantially generates electromagnetic waves having a center frequency between circa 1 GHz to circa 500 GHz, preferably circa 100 GHz. The bandwidth may range between circa 1% and 100%. Thus, the electromagnetic waves are in the microwave or millimetre-wave range. Upon entry in the waveguiding structure 2, the waves propagate in the guided electromagnetic wave propagation direction P, thereby passing the apertures 4. When a particular wavefront impinges a specific aperture 4a, a wave leaks away from the waveguiding structure 2. When the particular wavefront arrives at a subsequent aperture 4b, a further wave leaks away. As such, a number of waves leak away from the waveguiding structure 2.

The slots 4a, 4b are arranged at a particular offset with respect to a symmetry axis X of the waveguiding structure 2, thereby controlling power of the corresponding radiation wave that leaks away from the specific aperture.

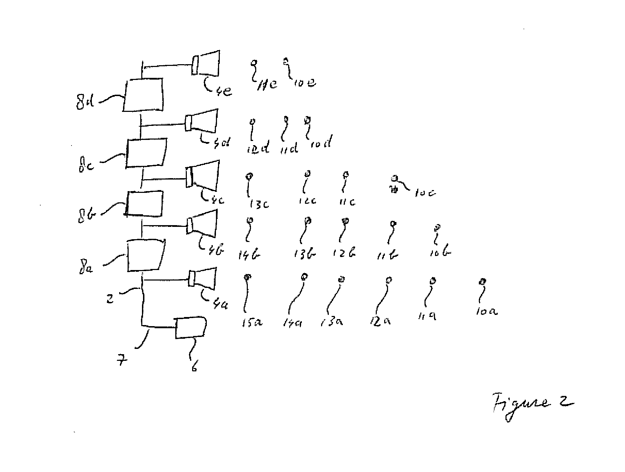

Figure 2 shows a schematic diagram of the electromagnetic illumination source 1. Here, apertures are schematically depicted as separate transmitters 4a-e radiating the waves that leak away from the waveguiding structure 2. Further, a delay corresponding with the travel time of the guided wave travelling in the propagation direction P from a first aperture 4a to a subsequent aperture 4b is schematically depicted as a delay element 8a. Similarly, further delays of the travelling wave are represented by further delay elements 8b-d. Wave fronts of the first individual wave transmitted by a first aperture 4a are symbolically shown as dots 10a-15a, thus corresponding to instants in a temporal order. In an equal manner wave fronts of the further individual waves are symbolically shown as dots 10b-14b, 10c-13c, 10d-12d, 10e-11e. The dots having the same reference number refer to a corresponding wavefront of the original guided wave. The character supplemented to the dot reference refers to the specific aperture 4 generating the individual wave. Since the distance between subsequent apertures 4 is larger than a coherence length associated with the predefined spectrum of the guided wave, the individual transmitted waves are non-coherent. The electromagnetic illumination source therefore radiates non-coherent waves, thus forming a spatially distributed non-coherent illumination source. Though samples of waves are present that are mutually coherent, the distance between said wave samples is large enough to avoid that coherent interference actually occurs.

The coherence length is inversely proportional with the bandwidth of the noise generator 6. The dynamic behaviour of the noise generator 6 that is associated with said bandwidth provides the non-coherent character of the illumination source, in particular the non-coherent character of waves that are radiated from subsequent apertures.

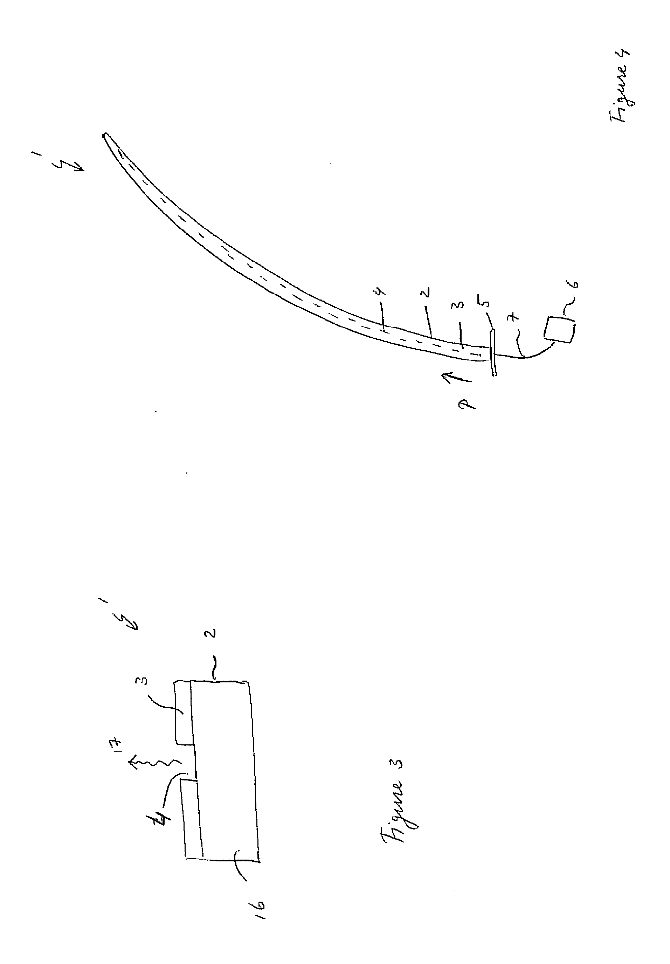

Figure 3 shows a cross sectional view of the electromagnetic illumination source 1 along the interrupted line A in the section 5 that is shown in more detail in the enlarged view of Fig. 1. Here, it is shown that the metal shield 3 at least partially covers the dielectric structure 16 of the waveguiding structure. From the slot 4, a wave 17 leaks away from the waveguiding structure. The dimensions of the waveguiding structure 2 are designed such that electromagnetic waves in a desired, pre-defined spectrum are mainly guided, so that a minimum of electromagnetic energy is lost in the waveguiding structure itself. Therefore, preferably, the waveguiding structure is substantially lossless. However, in principle, the waveguiding structure can also be arranged for guiding the electromagnetic wave in a lossy way. Further, the waveguiding structure can be implemented as a closed or open waveguide, e.g. as a waveguide filled with air. As an example of an alternative waveguiding structure, a closed metal pipe is formed, wherein a specific side of the pipe forms the metal shield 3 being provided with the slots 4.

The source 1 as shown in Fig. 1 comprises several tens of slots, e.g. a multiple number of slots in a range from 2 to circa 200. In principle, also other number of slots can be applied, e.g. hundreds of slots. Further, the slots form a linear array along the guided electromagnetic wave propagation direction P. In the embodiment shown in Fig. 1 the linear array is mainly straight.

Figure 4 shows a schematic view of a second embodiment of a distributed electromagnetic illumination source 1 according to the invention. In contrast to the embodiment shown in Fig. 1, the source in Fig. 4 is curved, thereby making the source 1 particularly suitable for illuminating a specific object from different angular orientations. As an option, the source can be arranged such that it at least partially surrounds an object to be illuminated, so that specular information can be obtained.

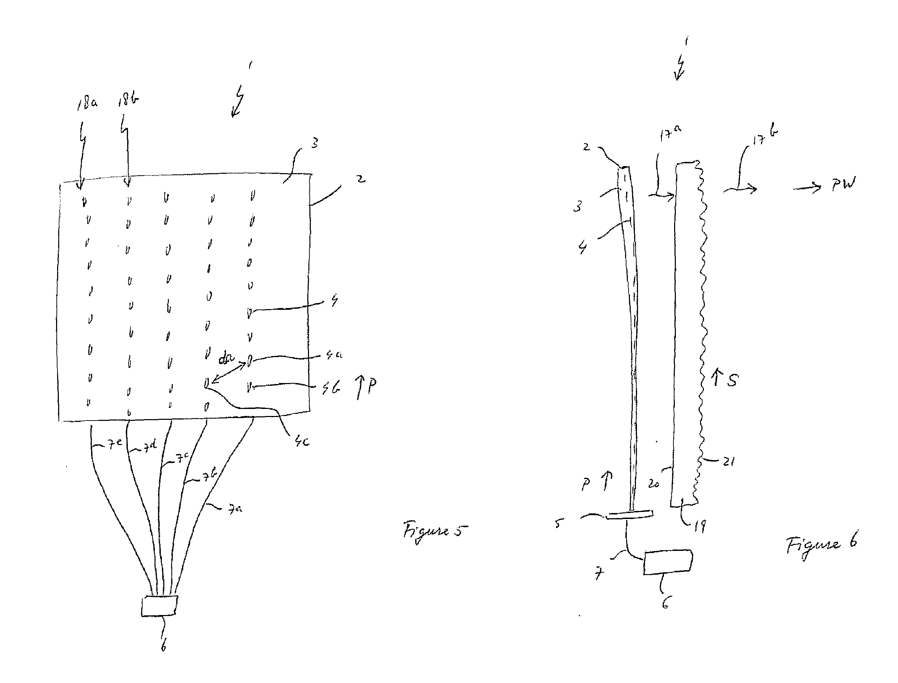

Figure 5 shows a schematic view of a third embodiment of a distributed electromagnetic illumination source 1 according to the invention. Here, the metal shield 3 comprises a multiple number of linear slot arrays 18a, 18b forming a two-dimensional slot array. Each of the linear slot arrays 18a, 18b is coupled to a corresponding transmission line, e.g. a fibre 7a-e, coupling the noise generator 6 to the waveguiding structure 3. By providing a two-dimensional slot array, a particular illumination field can be obtained.

Similar to the one-dimensional embodiment, a distance da between adjacent slots 4a, 4b in adjacent linear slot arrays is larger than the coherence length associated with the predefined spectrum, so that the apertures radiate mutually non-coherent waves. This can e.g. be implemented by inserting transmission lines 7a-e having different wavelengths. According to an aspect of the invention, multiple one-dimensional waveguiding structures can separately be positioned in space and coupled to the noise generator 6, thus providing more flexibility in placing the source.

Figure 6 shows a schematic view of a fourth embodiment of an electromagnetic illumination source 1 according to the invention. The source 1 comprises a linear slot array and a further 2D dielectric structure 19 positioned in a radiation field 17a of the slots 4. The further dielectric structure 19 is provided with a first, proximate end surface 20 and a second, remote end surface 21, the end surfaces being oriented substantially transverse with respect to a propagation direction of radiation waves emitted by the slots 4. The remote end surface 21 has a rough structure, thereby differentiating in radiation path lengths and overcoming the coherence length in the dielectric. As a consequence, any coherence of radiation waves travelling through the further dielectric structure 19 and leaving the structure 19 as a secondary wave 17b is further reduced. Instead of providing the remote end surface with a rough edge, the proximate end surface or both end surfaces have a rough edge. In this manner, also an incoherence is realized in a direction transverse to the waveguide.

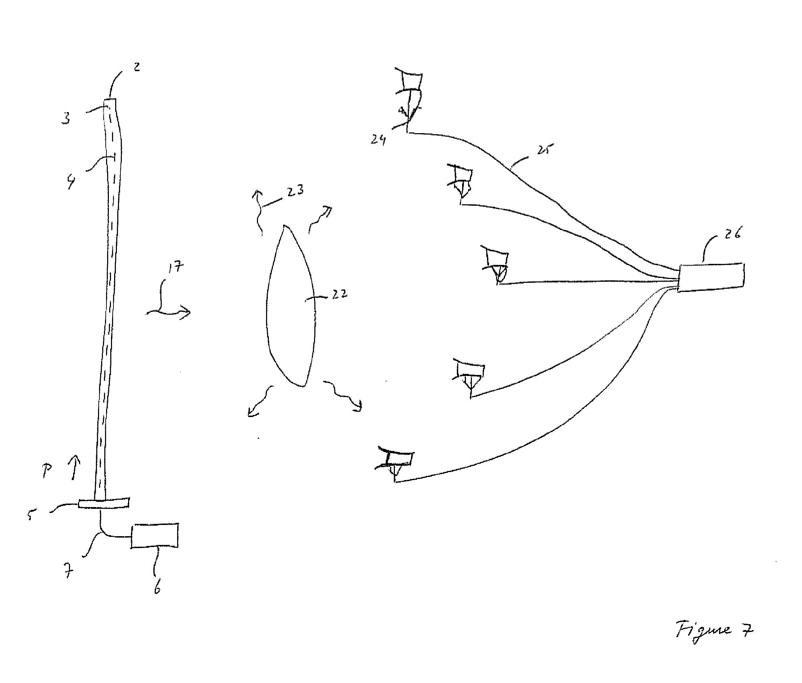

Figure 7 shows a schematic view of the electromagnetic illumination of Figure 1 as part of an imaging arrangement. The imaging arrangement comprises a number of millimetre wave receptors 24 connected to an imaging unit 26 for interpretation of the received signals. The imaging arrangement is arranged for analyzing an object 22 that radiates and/or reflects micrometre or millimetre waves 23, e.g. for security applications. As an example, a person whose clothing are transparent for the used millimetres waves can form the object. The spatially distributed illumination source 1 according to the invention radiates non-coherent radiation 17 to the object 22, so that the resolution of the imaging process improves, in particular in in-house applications. By using the imaging arrangement shown in Figure 7 an improved method is provided for imaging an object.

The invention is not restricted to the embodiments described herein. It will be understood that many variants are possible.

As an example, the source can also be used in the field of biometry.

Other such variants will be obvious for the person skilled in the art and are considered to lie within the scope of the invention as formulated in the following claims.

## Claims

1. A distributed electromagnetic illumination source for radiating non-coherent waves, comprising a waveguiding structure for guiding electromagnetic waves in a predefined spectrum, the waveguiding structure being provided with a multiple number of apertures arranged substantially along a guided electromagnetic wave propagation direction wherein a distance between subsequent apertures is larger than a coherence length associated with the predefined spectrum.

2. A source according to claim 1, further comprising a noise generator coupled to the waveguiding structure for exciting electromagnetic waves in the predefined spectrum and coupling the waves into the waveguiding structure.

3. A source according to claim 1 or 2, wherein the predefined spectrum is in the micro-wave or millimetre-wave range.

4. A source according to any of the previous claims, wherein the center frequency of the pre-determined spectrum is between circa 1 GHz and circa 500 GHz.

5. A source according to any of the previous claims, wherein the waveguiding structure comprises a dielectric structure and a metal shield at least partially covering the dielectric structure, and wherein the apertures are formed by a multiple number of slots provided in the metal shield and arranged substantially along the guided electromagnetic wave propagation direction.

6. A source according to any of the previous claims, wherein the waveguiding structure forms a slotted waveguide.

7. A source according to any of the previous claims, wherein the metal shield comprises several tens or hundreds of slots.

8. A source according to any of the previous claims, wherein the slots substantially form a linear array.

9. A source according to claim 8, wherein the linear array is curved.

10. A source according to any of the previous claims, wherein the metal shield comprises a multiple number of linear slot arrays forming a two-dimensional slot array.

11. A source according to claim 10, wherein a distance between adjacent slots in adjacent linear slot arrays is larger than the coherence length associated with the predefined spectrum.

12. A source according to any of the previous claims, wherein the waveguiding structure is arranged for guiding electromagnetic waves in a substantially lossless way.

13. A source according to any of the previous claims, further comprising a further dielectric structure positioned in a radiation field of the slots, the further dielectric structure being provided with a first and second end surface oriented substantially transverse with respect to the propagation direction of the radiation emitted by the slots, at least one of the first and/or second end surfaces being provided with a rough edge.

14. A method of imaging an object, comprising receiving electromagnetic waves propagating from the object, wherein the method further comprises using a distributed electromagnetic illumination source for radiating non-coherent waves, comprising a waveguiding structure for guiding electromagnetic waves in a predefined spectrum, the waveguiding structure being provided with a multiple number of apertures arranged substantially along a guided electromagnetic wave propagation direction wherein a distance between subsequent apertures is larger than a coherence length associated with the predefined spectrum.
